# EUROPEAN PATENT SPECIFICATION

(11) **EP 3 071 523 B1**
(45) Date of publication and mention of the grant of the patent: **11.09.2019**
(21) Application number: 14805331.7
(22) Date of filing: 20.11.2014
(51) Int. Cl.: C02F 1/28, B01J 20/02, B01D 71/02

(54) **WATER PURIFICATION**
WASSERREINIGUNG
PURIFICATION DE L'EAU

(30) Priority: 21.11.2013 GB 201320564
(43) Date of publication of application: 28.09.2016
(73) Proprietor: The University Of Manchester, Manchester M13 9PL (GB)
(72) Inventor: RAVEENDRAN-NAIR, Rahul, Manchester M13 9PL (GB); JOSHI, Rakesh K., Manchester M13 9NT (GB); GEIM, Andre, Manchester M13 9PL (GB)
(74) Representative: HGF Limited
(86) International application number: PCT/GB2014/053430
(87) International publication number: WO 2015/075451

(56) References cited:
- WO-A1-2012/170086
- WO-A1-2014/027197
- US-A- 3 457 171
- US-A1- 2013 270 188
- R R NAIR ET AL: "Unimpeded permeation of water through helium-leak-tight graphene-based membranes", SCIENCE, vol. 335, 27 January 2012 (2012-01-27), pages 442-444, XP055042954, DOI: 10.1126/science.1211694 cited in the application
- Pengzhan Sun ET AL: "Selective Ion Penetration of Graphene Oxide Membranes", ACS Nano, vol. 7, no. 1, 22 January 2013 (2013-01-22), pages 428-437, XP055163226, ISSN: 1936-0851, DOI: 10.1021/nn304471w

## Description

This invention relates to methods of purifying water using graphene oxide laminates which are formed from stacks of individual graphene oxide flakes which may be predominantly monolayer thick. The graphene oxide laminates may act as membranes or they may act as sorbents.

### BACKGROUND

The removal of solutes from water finds application in many fields.

This may take the form of the purification of water for drinking or for watering crops or it may take the form of the purification of waste waters from industry to prevent environmental damage. Examples of applications for water purification include: the removal of salt from sea water for drinking water or for use in industry; the purification of brackish water; the removal of radioactive ions from water which has been involved in nuclear enrichment, nuclear power generation or nuclear clean-up (e.g. that involved in the decommissioning of former nuclear power stations or following nuclear incidents); the removal of environmentally hazardous substances (e.g. halogenated organic compounds, heavy metals, chlorates and perchlorates) from industrial waste waters before they enter the water system; and the removal of biological pathogens (e.g. viruses, bacteria, parasites, etc) from contaminated or suspect drinking water.

In many industrial contexts (e.g. the nuclear industry) it is often desirable to separate dangerous or otherwise undesired solutes from valuable (e.g. rare metals) solutes in industrial waste waters in order that the valuable solutes can be recovered and reused or sold.

Graphene is believed to be impermeable to all gases and liquids. Membranes made from graphene oxide are impermeable to most liquids, vapours and gases, including helium. However, an academic study has shown that, surprisingly, graphene oxide membranes which are effectively composed of graphene oxide having a thickness around 1 µm are permeable to water even though they are impermeable to helium. These graphene oxide sheets allow unimpeded permeation of water (10¹⁰ times faster than He) (Nair et al. Science, 2012, 335, 442-444). Such GO laminates are particularly attractive as potential filtration or separation media because they are easy to fabricate, mechanically robust and offer no principal obstacles towards industrial scale production.

Zhao et al (Environ. Sci. Technol., 2011, 45, 10454-10462) and WO2012/170086 describe sorbents which comprise few layer graphene oxide used as a dispersion. However, these sorbents are non selective with small ions, complex ions and organic dye molecules being removed from solution at the same time. We believe that the lack of selectivity arises because large solutes adsorb onto the surfaces of the graphene oxide flakes at the same time as small solutes absorbing into the nanocapillaries between the graphene oxide layers.

CN101973620 describes the use of a monolayer graphene oxide sheet as an adsorbent of heavy metal ions. Again, such sheets are expected to be non-selective, with both large and small solutes being adsorbed, because the interaction is solely a surface effect.

Sun et al (Selective Ion Penetration of Graphene Oxide Membranes; ACS Nano 7, 428 (2013)) describes the selective ion penetration of graphene oxide membranes in which the graphene oxide is formed by oxidation of wormlike graphite. The membranes are freestanding in the sense that they are not associated with a support material. The resultant graphene oxide contains more oxygen functional groups than graphene oxide prepared from natural graphite and laminates formed from this material have a wrinkled surface topography. Such membranes differ from those of the present invention because they do not show fast ion permeation of small ions and also demonstrate a selectivity which is substantially unrelated to size

This study found that sodium salts permeated quickly through GO membranes, whereas heavy metal salts permeated much more slowly. Copper sulphate and organic contaminants, such as rhodamine B are blocked entirely because of their strong interactions with GO membranes. According to this study, ionic or molecular permeation through GO is mainly controlled by the interaction between ions or molecules with the functional groups present in the GO sheets. The authors comment that the selectivity of the GO membranes cannot be explained solely by ionic-radius based theories. They measured the electrical conductivities of different permeate solutions and used this value to compare the permeation rates of different salts. The potential applied to measure the conductivities can affect ion permeation through membranes.

Other publications (Y. Han, Z. Xu, C. Gao. Adv. Funct. Mater. 23, 3693 (2013); M. Hu, B. Mi. Environ. Sci. Technol. 47, 3715 (2013); H. Huang et al. Chem. Comm. 49, 5963 (2013)) have reported filtration properties of GO laminates and, although results varied widely due to different fabrication and measurement procedures, they reported appealing characteristics including large water fluxes and notable rejection rates for certain salts. Unfortunately, large organic molecules were also found to pass through such GO filters. The latter observation is disappointing and would considerably limit interest in GO laminates as molecular sieves. In this respect, we note that the emphasis of these studies was on high water rates that could be comparable to or exceed the rates used for industrial desalination. Accordingly, a high water pressure was applied and the GO membranes were intentionally prepared as thin as possible, 10-50 nm thick. It may be that such thin stacks contained holes and cracks (some may appear after applying pressure), through which large organic molecules could penetrate.

US 3457171 provides a semi-permeable membrane for use in a reversed osmosis desalting cell consisting of a thin continuous graphite oxide film placed on a substrate.

### BRIEF SUMMARY OF THE DISCLOSURE

In accordance with a first aspect of the invention there is provided a method of reducing the amount of one or more solutes in an aqueous mixture to produce a liquid with an altered ratio of the concentration of one or more solutes relative to the concentration of one or more other solutes; the method comprising:
(a) contacting a first face of a graphene oxide laminate membrane with the aqueous mixture comprising the solutes;
(b) recovering the liquid having the altered concentration ratio from or downstream from a second face of the membrane;
wherein the graphene oxide laminate membrane has a thickness greater than 100 nm and wherein the graphene oxide flakes of which the laminate is comprised have an average oxygen:carbon weight ratio in the range of from 0.3:1.0 to 0.4:1.0.

Thus, in an embodiment, there is provided a fluid filtration device comprising a graphene oxide laminate membrane having a thickness greater than about 100 nm and wherein the graphene oxide flakes from which the laminate is comprised have an average oxygen:carbon weight ratio in the range of from 0.3:1.0 to 0.4:1.0.

The term "solute" applies to both ions and counter-ions, and to uncharged molecular species present in the solution. Once dissolved in aqueous media a salt forms a solute comprising hydrated ions and counter-ions. The uncharged molecular species can be referred to as "non-ionic species". Examples of non-ionic species are small organic molecules such as aliphatic or aromatic hydrocarbons (e.g. toluene, benzene, hexane, etc), alcohols (e.g. methanol, ethanol, propanol, glycerol, etc), carbohydrates (e.g. sugars such as sucrose), and amino acids and peptides. The non-ionic species may or may not hydrogen bond with water. As will be readily apparent to the person skilled in the art, the term 'solute' does not encompass solid substances which are not dissolved in the aqueous mixture. Particulate matter will not pass through the membranes of the invention even if the particulate is comprised of ions with small radii.

The term "hydration radius" refers to the effective radius of the molecule when solvated in aqueous media.

The reduction of the amount one or more selected solutes in the solution which is treated with the GO membrane of the present invention may entail entire removal of the or each selected solute. Alternatively, the reduction may not entail complete removal of a particular solute but simply a lowering of its concentration. The reduction may result in an altered ratio of the concentration of one or more solutes relative to the concentration of one or more other solutes. The inventors have found that solutes with a hydration radius of less than about 4.5 Å pass very quickly through a graphene oxide laminate whereas solutes with a hydration radius greater than about 4.7 Å do not pass through at all. Thus it may be that the purified aqueous solution contains substantially no solute having a hydration radius of greater than about 4.7 Ǻ

In cases in which salt is formed from one ion having a hydration radius of larger than about 4.5 Ǻ and a counter-ion with a hydration radius of less than about 4.5 Ǻ, neither ion will pass through the membrane of the invention because of the electrostatic attraction between the ions. Thus, for example, in the case K₃Fe(CN)₆, neither the Fe(CN)₆ ³⁻ nor the K⁺ pass through the membrane even though the hydration radius of K⁺ is less than 4.5 Ǻ.

No electrical potential needs to be applied to the membrane. Thus, it may be that solutes of a size i.e. hydration radius of less than about 4.5 Ǻ may pass through on account of diffusion. It is also possible to achieve the same effect by the application of pressure to the solute.

The size exclusion limit of the membrane is about 4.5 Ǻ; however, this exclusion limit may vary between about 4.5 Ǻ and about 4.7 Ǻ. In the region around sizes between about 4.5 Ǻ and about 4.7 Ǻ the degree of transmission decreases by orders of magnitude and consequently the perceived value of the size exclusion limit depends on the amount of transmission of solute that is acceptable for a particular application.

Thus, the one or more solutes the amount of which are reduced in the method of the invention may have a hydration radius greater than about 4.5 Ǻ. It follows that the purified liquid may contain a reduced amount of any solutes having a hydration radius of greater than about 4.5 Ǻ. In an embodiment, the or each solute has a radius of hydration greater than 4.7 Å. It may be that the or each solute has a radius of hydration greater than 4.8 Å, e.g. the or each solute has a radius of hydration greater than 4.9 Å, or greater than 5.0 Å.

The flakes of graphene oxide which are stacked to form the laminate of the invention are usually monolayer graphene oxide. However, it is possible to use flakes of graphene oxide containing from 2 to 10 atomic layers of carbon in each flake. These multilayer flakes are frequently referred to as "few-layer" flakes. Thus the membrane may be made entirely from monolayer graphene oxide flakes, from a mixture of monolayer and few-layer flakes, or from entirely few-layer flakes. Ideally, the flakes are entirely or predominantly, i.e. more than 75%w/w, monolayer graphene oxide.

The graphene oxide laminate used in the method of the invention has the overall shape of a sheet-like material through which the solute may pass when the laminate is wet with an aqueous or aqueous-based mixture optionally containing one or more additional solvents (which may be miscible or immiscible with water). The solute may only pass provided it is of sufficiently small size. Thus the aqueous solution contacts one face or side of the membrane and purified solution is recovered from the other face or side of the membrane.

In an embodiment, the method is a method of selectively reducing the amount of a first set of one or more solutes in an aqueous mixture without significantly reducing the amount of a second set of one or more solutes in the aqueous mixture to produce a liquid depleted in said first set of solutes but not depleted in said second set of solutes, wherein the or each solute of the first set has a radius of hydration greater than about 4.5 Å and the or each solute of the second set has a radius of hydration less than about 4.5 Å. It may be that the or each solute of the second set has a radius of hydration less than about 4.5 Å, e.g. the or each solute of the second set has a radius of hydration less than about 4.4 Å. It may be that the or each solute of the first set has a radius of hydration greater than about 4.7 Å, e.g. the or each solute of the first set has a radius of hydration greater than about 4.8 Å or optionally greater than about 5.0 Å.

In an embodiment, the method is continuous. Thus, steps (a) and (b) may be carried out simultaneously or substantially simultaneously.

It may be that the aqueous mixture is permitted to pass though the membrane through diffusion and / or it may be that a pressure is applied.

Preferably, no electrical potential is applied across the membrane. In principle, an electrical potential could be applied.

The graphene oxide laminate membrane is optionally supported on a porous material. This can provide structural integrity. In other words, the graphene oxide flakes may themselves form a layer e.g. a laminate which itself is associated with a porous support such as a porous membrane to form a further laminate structure. In this embodiment, the resulting structure is a laminate of graphene flakes mounted on the porous support. In one illustrative example, the graphene oxide laminate membrane may be sandwiched between layers of a porous material.

In an embodiment, the GO flakes which form the membrane have been prepared by the oxidation of natural graphite.

The method may involve a plurality of graphene oxide laminate membranes. Thus, the filtration device may comprise a plurality of graphene oxide laminate membranes. These may be arranged in parallel (to increase the flux capacity of the process/device) or in series (where a reduction in the amount of one or more solute is achieved by a single laminate membrane but that reduction is less than desired).

The fluid filtration device may be a filter or it may be a removable and replaceable filter unit for a filtration apparatus. The filtration device may be a filtration apparatus.

In a variant of the disclosure there is provided a method of reducing the amount of one or more solutes in an aqueous mixture to produce a liquid depleted in said solutes; the method comprising:
(a) contacting the aqueous mixture with a sorbent comprising a graphene oxide laminate membrane; and
(b) separating the sorbent from the liquid.

The disclosure also relates to sorbents which can be used in this method and which are described below.

Thus, in another variant of the disclosure, there is provided a sorbent comprising a graphene oxide laminate membrane which is optionally supported on a porous material. The porous material can provide structural integrity.

The flakes of graphene oxide which are stacked to form the laminate of the invention are usually monolayer graphene oxide. However, it is possible to use flakes of graphene oxide containing from 2 to 10 atomic layers of carbon in each flake. These multilayer flakes are frequently referred to as "few-layer" flakes. Thus the membrane may be made entirely from monolayer graphene oxide flakes, from a mixture of monolayer and few-layer flakes, or from entirely few-layer flakes. Ideally, the flakes are entirely or predominantly, i.e. more than 75%w/w, monolayer graphene oxide.

The inventors have found that solutes or ions with a radius of less than about 4.5 Å absorb very quickly into a graphene oxide laminate i.e. the sorbent material to form localised (within the laminate) high concentration solutions of the solute(s) in question. The majority of the surfaces (belonging to individual graphene oxide flakes) with which the solutes interact are internal to the graphene oxide laminate in the sense of being within the capillaries of the laminate of the graphene flakes. Migration of the solutes into the sorbent leads to a concentration within the GO laminate which can be an order of magnitude or greater higher than the concentration on the outside i.e. in the aqueous mixture or the purified liquid.

This means that substantially no solutes with a hydrated radius larger than about 4.5 Å can adsorb onto the surface of the flakes. This makes the sorbents of the disclosure very selective in separating solutes by size. The absorption properties of the membrane are observed with solutes with a hydration radius of less than about 4.5 Ǻ; however, this exclusion limit may vary between about 4.5 Ǻ and about 4.7 Ǻ. In the region around sizes between about 4.5 Ǻ and about 4.7 Ǻ the degree of transmission decreases by orders of magnitude and consequently the perceived value of the size exclusion limit depends on the amount of transmission of solute that is acceptable for a particular application.

In an embodiment, the graphene oxide flakes of which the laminate is comprised have an oxygen:carbon weight ratio in the range 0.3 to 0.4.

It may be that the graphene oxide laminate membrane is formed from graphene oxide which has been prepared by the oxidation of natural graphite.

The sorbents of the disclosure are also easier to handle than the graphene oxide dispersions of the prior art. It is difficult to separate completely a dispersed fine solid from a liquid, whereas the membranes of the invention form larger units which can be more easily filtered out.

Thus, the one or more solutes the amount of which are reduced in the method of the invention may have a hydration radius less than about 4.5 Ǻ. It follows that the purified liquid may contain a reduced amount of any solutes having a hydration radius of less than about 4.5 Ǻ. In an embodiment, the or each solute has a radius of hydration less than about 4.5 Å. It may be that the or each solute has a radius of hydration less than about 4.4 Å, e.g. the or each solute has a radius of hydration less than about 4.25 Å.

In a variant of the disclosure, the method further comprises removing the one or more solutes from the sorbent. This may be achieved using an acid wash or alternatively by placing the sorbent in deionised water for an appropriate period of time. Where, the one or more solutes are removed by placing the sorbent in deionised water, that water may be at a temperature from about 25 °C to about 70 °C. Thus, the sorbent can be regenerated and reused and the absorbed solutes can be recovered or substantially recovered.

In a variant of the disclosure, the method is a method of selectively reducing the amount of a first set of one or more solutes in an aqueous mixture without significantly reducing the amount of a second set of one or more solutes in the aqueous mixture to produce a liquid depleted in said first set of solutes but not depleted in said second set of solutes, wherein the or each solute of the first set has a radius of hydration less than about 4.5 Å and the or each solute of the second set has a radius of hydration greater than about 4.7 Å. It may be that the or each solute of the first set has a radius of hydration less than about 4.4 Å e.g. the or each solute of the first set has a radius of hydration less than about 4.25 Å. It may be that the or each solute of the second set has a radius of hydration greater than about 4.8 Å, e.g. the or each solute of the second set has a radius of hydration greater than about 5.0 Å.

It may be that that the aqueous mixture is not acidic. Thus the aqueous mixture may be either neutral or alkaline. It may be that the aqueous mixture has a pH from about 5 to about 13, e.g. from about 6 to about 12 or from about 7 to about 11.

The method may comprise the step of: increasing the pH of the first aqueous mixture to obtain a modified aqueous mixture. It is this modified aqueous mixture which is modified with the sorbent in step a) described above. Increasing the pH may be achieved by adding a base, e.g. an aqueous alkaline solution, to the first aqueous mixture. Suitable alkaline solutions include: ammonium hydroxide, sodium hydroxide, potassium hydroxide, sodium carbonate, potassium carbonate, sodium bicarbonate etc.

The inventors have surprisingly found that the effectiveness of graphene oxide laminates as sorbents increases with pH.

The graphene oxide laminate membrane may is optionally supported on a porous material to provide structural integrity, e.g. a flexible porous support. The porous material may be a porous polymer support, e.g. a flexible porous polymer support.

Preferably, the graphene oxide laminate membrane has a thickness greater than about 100 nm.

In an illustrative embodiment, the sorbent comprises a composite of the graphene oxide laminate membrane on a flexible porous support in the form of a roll, a ball, a sheet or a folded sheet.

The following paragraphs may apply to the membranes of the invention.

In an embodiment, the graphene oxide laminate membrane has a thickness greater than about 500 nm, e.g. a thickness between about 500 nm and about 100 µm. The graphene oxide laminate membrane may have a thickness up to about 50 µm. The graphene oxide laminate membrane may have a thickness greater than about 1 µm, e.g. a thickness between 1 µm and 15 µm. Thus, the graphene oxide laminate membrane may have a thickness of about 5 µm.

The graphene oxide laminates used in the invention may comprise a cross-linking agent.

A cross linking agent is a substance which bonds with GO flakes in the laminate. The cross linking agent may form hydrogen bonds with GO flakes or it may form covalent bonds with GO flakes. Examples include diamines (e.g. ethyl diamine, propyl diamine, phenylene diamine), polyallylamines and imidazole. Without wishing to be bound by theory, it is believed that these are examples of crosslinking agents which form hydrogen bonds with GO flakes. Other examples include borate ions and polyetherimides formed from capping the GO with polydopamine. Examples of appropriate cross linking systems can be found in Tian et al, (Adv. Mater. 2013, 25, 2980-2983), An et al (Adv. Mater. 2011, 23, 3842-3846), Hung et al (Cross-linking with Diamine monomers to Prepare Composite Graphene Oxide-Framework Membranes with Varying d-Spacing; Chemistry of Materials, 2014**)** and Park et al (Graphene Oxide Sheets Chemically Cross-Linked by polyallylamine; J. Phys. Chem. C; 2009**)**

The GO laminate may comprise a polymer. The polymer may be interspersed throughout the membrane. It may occupy the spaces between graphene oxide flakes, thus providing interlayer crosslinking. The polymer may be PVA (see for example Li et al Adv. Mater. 2012, 24, 3426-3431). It has been found that GO laminates comprising interspersed polymer exhibit improved adhesiveness to certain substrates (e.g. metals) than GO membranes which do not comprise a polymer. Other polymers which could be used in this manner include poly(4-styrenesulfonate), Nafion, carboxymethyl cellulose, Chitosan, polyvinyl pyrrolidone, polyaniline etc. It may be that the polymer is water soluble. Where the GO laminate comprises a polymer, that polymer (e.g. PVA) may be present in an amount from about 0.1 to about 50 wt%, e.g. from about 5 to about 45 wt%. Thus, the GO laminate may comprise from about 20 to about 40 wt% polymer. Alternatively, it may be that the polymer is not water soluble.

It may be that the GO laminate does not comprise a polymer.

The GO laminate may comprise other inorganic materials, e.g. other two dimensional materials, such as graphene, reduced graphene oxide, hBN, mica. The presence of mica, for example can slightly improve the mechanical properties of the GO laminate.

The membrane may be a graphene oxide membrane comprising only flakes of graphene oxide.

In an embodiment, the porous support is an inorganic material. Thus, the porous support (e.g. membrane) may comprise a ceramic. Preferably, the support is alumina, zeolite, or silica. In one embodiment, the support is alumina. Zeolite A can also be used. Ceramic membranes have also been produced in which the active layer is amorphous titania or silica produced by a sol-gel process.

In an alternate embodiment, the support is a polymeric material. Thus, the porous support may thus be a porous polymer support, e.g. a flexible porous polymer support. Preferably it is PTFE, PVDF or Cyclopore ™ polycarbonate. In an embodiment, the porous support (e.g. membrane) may comprise a polymer. In an embodiment, the polymer may comprise a synthetic polymer. These can be used in the invention. Alternatively, the polymer may comprise a natural polymer or modified natural polymer. Thus, the polymer may comprise a polymer based on cellulose.

In another embodiment, the porous support (e.g. membrane) may comprise a carbon monolith.

In an embodiment, the porous support layer has a thickness of no more than a few tens of µm, and ideally is less than about 100 µm. Preferably, it has a thickness of 50 µm or less, more preferably of 10 µm or less, and yet more preferably is less 5 µm. In some cases it may be less than about 1 µm thick though preferably it is more than about 1 µm.

Preferably, the thickness of the entire membrane (i.e. the graphene oxide laminate and the support) is from about 1 µm to about 200 µm, e.g. from about 5 µm to about 50.

The porous support should be porous enough not to interfere with water transport but have small enough pores that graphene oxide platelets cannot enter the pores. Thus, the porous support must be water permeable. In an embodiment, the pore size must be less than 1 µm. In an embodiment, the support has a uniform pore-structure. Examples of porous membranes with a uniform pore structure are electrochemically manufactured alumina membranes (e.g. those with the trade names: Anopore™, Anodisc™).

The one or more solutes can be ions and/or they could be neutral organic species, e.g. sugars, hydrocarbons etc. Where the solutes are ions they may be cations and/or they may be anions.

In another variant of the disclosure is provided the use of a graphene oxide laminate membrane for the purification of water.

The laminate may be comprised in a sorbent.

The purification of water may be achieved by size exclusion filtration.

The graphene oxide laminate membrane may have any of the features recited above. The use may be in any of the methods described above.

### BRIEF DESCRIPTION OF THE DRAWINGS

Embodiments of the invention are further described hereinafter with reference to the accompanying drawings, in which:

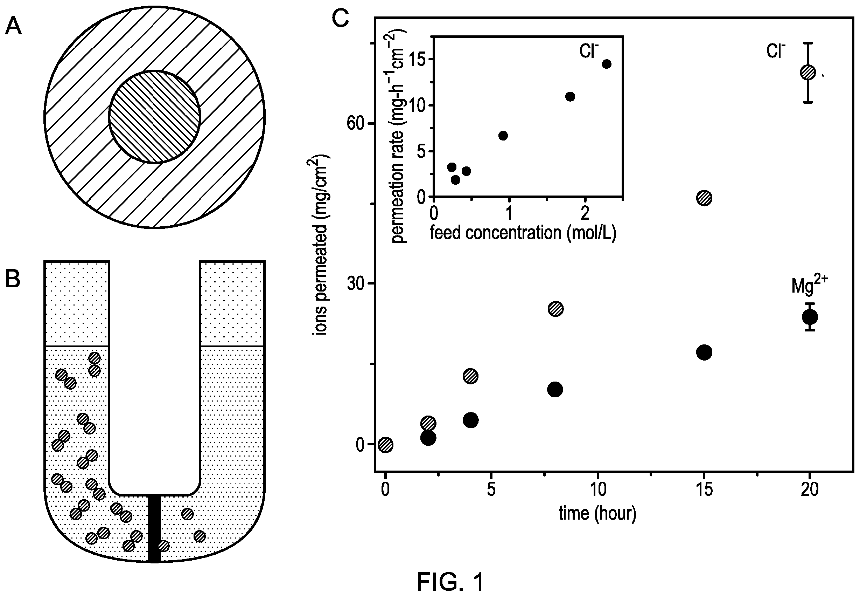

Figure. 1. shows ion permeation through GO laminates: **(A)** Photograph of a GO membrane covering a 1 cm opening in a copper foil; **(B)** Schematic of the experimental setup. The membrane separates the feed and permeate containers (left and right, respectively). Magnetic stirring is used to ensure no concentration gradients; **(C)** Filtration through a 5 µm thick GO membrane from the feed container with a 0.2 M solution of MgCl₂. The inset shows permeation rates as a function of C in the feed solution. Within our experimental accuracy (variations by a factor of <40% for membranes prepared from different GO suspensions), chloride rates were found the same for MgCl₂, KCI and CuCl₂. Dotted lines are linear fits.

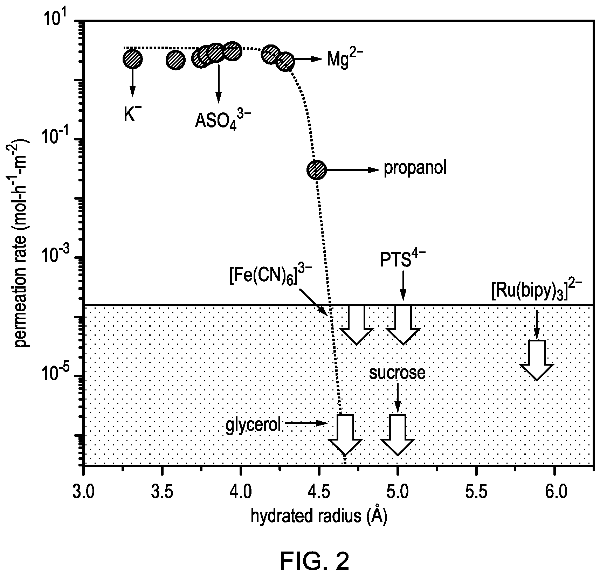

Fig. 2 shows the sieving through an atomic scale mesh. The shown permeation rates are normalized per 1M feed solution and measured by using 5 µm thick membranes. Some of the tested chemicals are named here; the others can be found in the Table 1 below. No permeation could be detected for the solutes shown within the grey area during measurements lasting for 10 days or longer. The thick arrows indicate our detection limit that depends on a solute. Several other large molecules including benzoic acid, DMSO and toluene were also tested and exhibited no detectable permeation. The dashed curve is a guide to the eye, showing an exponentially sharp cut-off with a semi-width of ≈0.1Å.

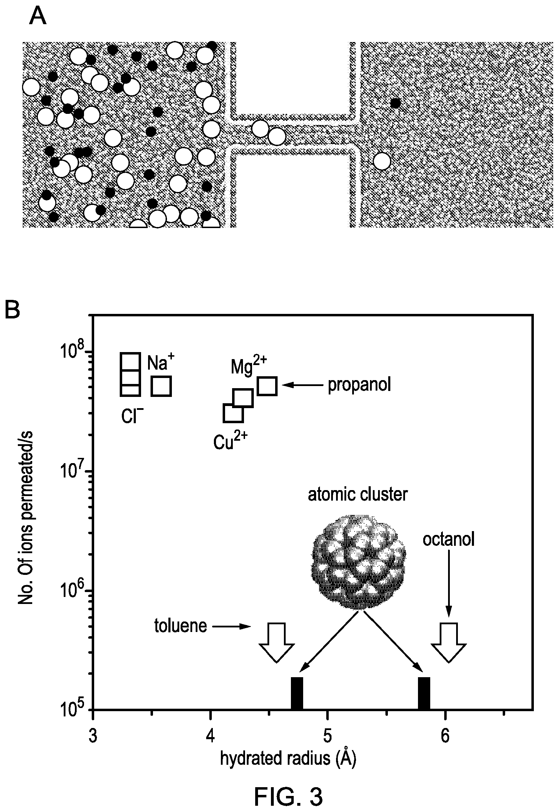

Fig. 3 shows some simulations of molecular sieving. **(A)** Snapshot of NaCI diffusion through a 9 Å graphene slit allowing two monolayers of water. Na⁺ and Cl⁻ ions are in yellow and blue, respectively. **(B)** Permeation rates for NaCl, CuCl₂, MgCl₂, propanol, toluene and octanol for capillaries containing two monolayers of water. For octanol poorly dissolved in water, the hydrated radius is not known and we use its molecular radius. Blue marks: Permeation cutoff for an atomic cluster (pictured in the inset) for capillaries accommodating two and three monolayers of water (width of 9 Å and 13 Å, respectively).

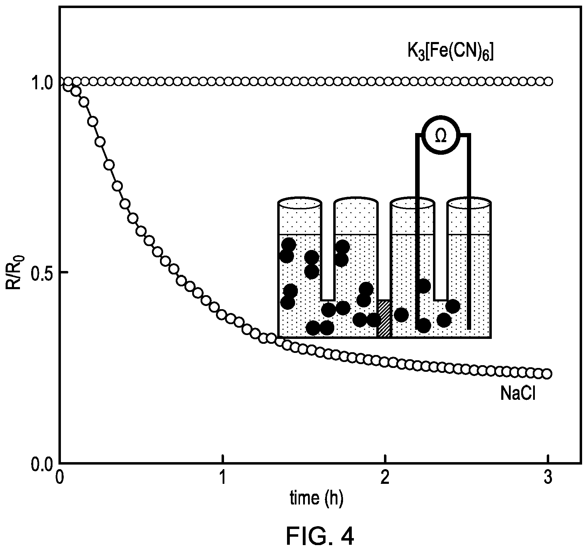

Fig. 4 shows that the permeation of salts through GO membranes can be detected by using electrical measurements. The inset shows the measurement setup, and the main figure plots relative changes in resistivity of water with time in the permeate container. Changes are normalized to an initial value of measured resistance of deionized water.

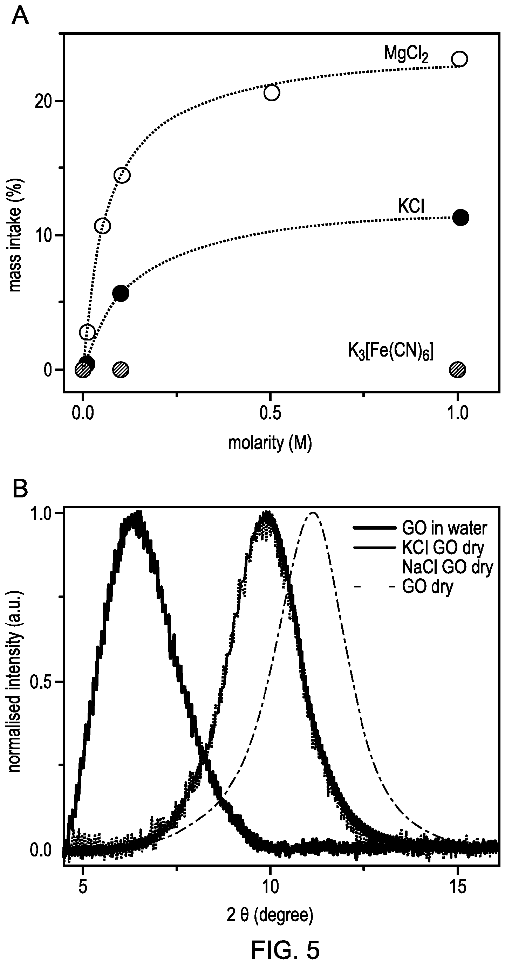

Fig. 5 shows salt intake by GO laminates. **(A)** Relative increase in weight for 5µm thick laminates soaked in different solutions. No intake could be detected for K₃[Fe(CN)₆] but it was large for small-radius salts. The dotted curves represent the best fit by the Langmuir isotherm. **(B)** X-ray diffraction for pristine GO, GO treated with NaCl, GO treated with KCI (all the measured at a relative humidity of ≈50%) and GO in water.

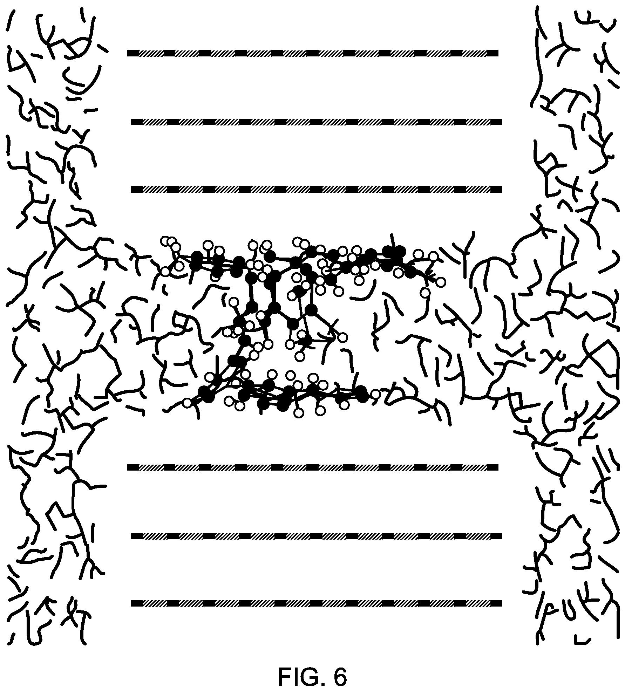

Fig. 6 shows a snapshot of our molecular dynamics simulations for toluene in water. All toluene molecules are trapped inside the short graphene channel and none leaves it even after 100 ns.

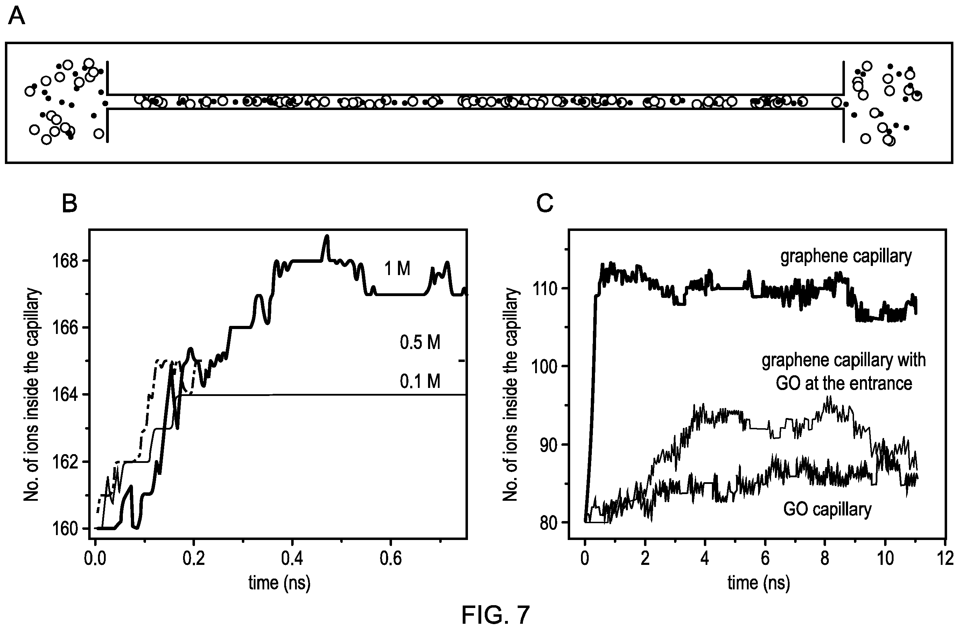

Fig. 7 shows a simulation of the salt-absorption effect. **(A)** Snapshot for the case of a 1M NaCI solution inside the capillary and 0.1 M in the reservoirs (water molecules are removed for clarity). Despite the concentration gradient, ions move from the reservoirs into the capillary. **(B)** Number of ions inside a 9 Å wide capillary (two layers of water) as a function of simulation time. Initial concentrations of NaCI in the two reservoirs were 0.1, 0.5 and 1 M for the different curves. The initial NaCI concentration inside the capillary was the same for all the curves (C =1 M). **(C)** Comparison between graphene and GO capillaries. Evolution of the number of ions inside a capillary (11Å wide) for initial *C* =1 M throughout the system.

### DETAILED DESCRIPTION

The present invention involves the use of graphene oxide laminate membranes. The graphene oxide laminates and laminate membranes of the invention comprise stacks of individual graphene oxide flakes, in which the flakes are predominantly monolayer graphene oxide. Although the flakes are predominantly monolayer graphene oxide, it is within the scope of this invention that some of the graphene oxide is present as two- or few-layer graphene oxide. Thus, it may be that at least 75% by weight of the graphene oxide is in the form of monolayer graphene oxide flakes, or it may be that at least 85% by weight of the graphene oxide is in the form of monolayer graphene oxide flakes (e.g. at least 95 %, for example at least 99% by weight of the graphene oxide is in the form of monolayer graphene oxide flakes) with the remainder made up of two- or few- layer graphene oxide. Without wishing to be bound by theory, it is believed that water and solutes pass through capillary-like pathways formed between the graphene oxide flakes by diffusion and that the specific structure of the graphene oxide laminate membranes leads to the remarkable selectivity observed as well as the remarkable speed at which the ions permeate the laminate structure.

In one illustrative example, the graphene oxide laminate membranes are made of impermeable functionalized graphene sheets that have a typical size *L* ≈1 µm and the interlayer separation, d, sufficient to accommodate a mobile layer of water.

The solutes to be removed from aqueous mixtures in the methods of the present invention may be defined in terms of their hydrated radius. Below are the hydrated radii of some exemplary ions and molecules.

**Table 1**

| **Ion/molecule** | **Hydrated radius (Å)** | **Ion/molecule** | **Hydrated radius (Å)** |
|---|---|---|---|
| K⁺ | 3.31 | Li⁺ | 3.82 |
| Cl⁻ | 3.32 | Rb⁺ | 3.29 |
| Na⁺ | 3.58 | Cs⁺ | 3.29 |
| CH₃COO⁻ | 3.75 | NH₄⁺ | 3.31 |
| SO₄²⁻ | 3.79 | Be²⁺ | 4.59 |
| AsO₄³⁻ | 3.85 | Ca²⁺ | 4.12 |
| C0₃²⁻ | 3.94 | Zn²⁺ | 4.30 |
| Cu²⁺ | 4.19 | Ag⁺ | 3.41 |
| Mg²⁺ | 4.28 | Cd²⁺ | 4.26 |
| propanol | 4.48 | Al³⁺ | 4.80 |
| glycerol | 4.65 | Pb²⁺ | 4.01 |
| [Fe(CN)₆]³⁻ | 4.75 | NO₃⁻ | 3.40 |
| sucrose | 5.01 | OH- | 3.00 |
| (PTS)⁴⁻ | 5.04 | H₃O⁺ | 2.80 |
| [Ru(bipy)₃]²⁺ | 5.90 | Br- | 3.30 |
| Tl⁺ | 3.30 | I- | 3.31 |

The hydrated radii of many species are available in the literature. However, for some species the hydrated radii may not be available. The radii of many species are described in terms of their Stokes radius and typically this information will be available where the hydrated radius is not. For example, of the above species, there exist no literature values for the hydrated radius of propanol, sucrose, glycerol and PTS⁴⁻. The hydrated radii of these species which are provided in the table above have been estimated using their Stokes/crystal radii. To this end, the hydrated radii for a selection of species in which this value was known can be plotted as a function of the Stokes radii for those species and this yields a simple linear dependence. Hydrated radii for propanol, sucrose, glycerol and PTS⁴⁻ were then estimated using the linear dependence and the known Stokes radii of those species.

There are a number of methods described in the literature for the calculation of hydration radii. Examples are provided in Determination of the effective hydrodynamic radii of small molecules by viscometry'; Schultz and Soloman; The Journal of General Physiology; 44; 1189-1199 (1963); and 'Phenomenological Theory of Ion Solvation'; E. R. Nightingale. J. Phys. Chem. 63, 1381 (1959).

The term 'aqueous mixture' refers to any mixture of substances which comprises at least 10% water by weight. It may comprise at least 50% water by weight and preferably comprises at least 80% water by weight, e.g. at least 90% water by weight. The mixture may be a solution, a suspension, an emulsion or a mixture thereof. Typically the aqueous mixture will be an aqueous solution in which one or more solutes are dissolved in water. This does not exclude the possibility that there might be particulate matter, droplets or micelles suspended in the solution. Of course, it is expected that the particulate matter will not pass through the membranes of the invention even if it is comprised of ions with small radii.

Particularly preferred solutes for removing from water in invention include hydrocarbons and oils, biological material, dyes, organic compounds (including halogenated organic compounds) and complex ions.

Particularly preferred solutes for removing from water in an embodiment of the invention include NaCl, heavy metals, ethanol, chlorates and perchlorates, and radioactive elements.

The graphene oxide for use in this application can be made by any means known in the art. In a preferred method, graphite oxide can be prepared from graphite flakes (e.g. natural graphite flakes) by treating them with potassium permanganate and sodium nitrate in concentrated sulphuric acid. This method is called Hummers method. Another method is the Brodie method, which involves adding potassium chlorate (KClO₃) to a slurry of graphite in fuming nitric acid. For a review see, Dreyer et al. The chemistry of graphene oxide, Chem. Soc. Rev., 2010, 39, 228-240.

Individual graphene oxide (GO) sheets can then be exfoliated by dissolving graphite oxide in water or other polar solvents with the help of ultrasound, and bulk residues can then be removed by centrifugation and optionally a dialysis step to remove additional salts.

In a specific embodiment, the graphene oxide of which the graphene oxide laminate membranes of the invention are comprised is not formed from wormlike graphite. Worm-like graphite is graphite that has been treated with concentrated sulphuric acid and hydrogen peroxide at 1000C to convert graphite into an expanded "worm-like" graphite. When this worm-like graphite undergoes an oxidation reaction it exhibits a higher increase the oxidation rate and efficiency (due to a higher surface area available in expanded graphite as compared to pristine graphite) and the resultant graphene oxide contains more oxygen functional groups than graphene oxide prepared from natural graphite. Laminate membranes formed from such highly functionalized graphene oxide can be shown to have a wrinkled surface topography and lamellar structure (Sun et al,; Selective Ion Penetration of Graphene Oxide Membranes; ACS Nano 7, 428 (2013) which differs from the layered structure observed in laminate membranes formed from graphene oxide prepared from natural graphite. Such membranes do not show fast ion permeation of small ions and a selectivity which is substantially unrelated to size (being due rather to interactions between solutes and the graphene oxide functional groups) compared to laminate membranes formed from graphene oxide prepared from natural graphite.

Without wishing to be bound by theory, individual GO crystallites formed from non-worm like graphite (e.g. natural or pristine graphite) may have two types of regions: functionalized (oxidized) and pristine. The former regions may act as spacers that keep adjacent crystallites apart and the pristine graphene regions may form the capillaries which afford the membranes their unique properties.

The preparation of graphene oxide supported on a porous membrane can be achieved using filtration, spray coating, casting, dip coating techniques, road coating, inject printing, or any other thin film coating techniques

For large scale production of supported graphene based membranes or sheets it is preferred to use spray coating, road coating or inject printing techniques. One benefit of spray coating is that spraying GO solution in water on to the porous support material at an elevated temperature produces a large uniform GO film.

Graphite oxide consists of micrometer thick stacked graphite oxide flakes (defined by the starting graphite flakes used for oxidation, after oxidation it gets expanded due to the attached functional groups) and can be considered as a polycrystalline material. Exfoliation of graphite oxide in water into individual graphene oxide flakes was achieved by the sonication technique followed by centrifugation at 10000 rpm to remove few layers and thick flakes. Graphene oxide laminates were formed by restacking of these single or few layer graphene oxides by a number of different techniques such as spin coating, spray coating, road coating and vacuum filtration.

Graphene oxide membranes according to the invention consist of overlapped layers of randomly oriented single layer graphene oxide sheets with smaller dimensions (due to sonication). These membranes can be considered as a centimetre size single crystals (grains) formed by parallel graphene oxide sheets. Due to this difference in layered structure, the atomic structure of the capillary structure of graphene oxide membranes and graphite oxide are different. For graphene oxide membranes the edge functional groups are located over the non-functionalised regions of another graphene oxide sheet while in graphite oxide mostly edges are aligned over another graphite oxide edge. These differences unexpectedly may influence the permeability properties of graphene oxide membranes as compared to those of graphite oxide.

We have studied GO laminates that were prepared from GO suspensions by using vacuum filtration as described in **Example 1.** The resulting membranes were checked for their continuity by using a helium leak detector before and after filtration experiments, which proved that the membranes were vacuum-tight in the dry state. Figure 1 shows schematics of our experiments. The feed and permeate compartments were initially filled with different liquids (same or different height) including water, glycerol, toluene, ethanol, benzene and dimethyl sulfoxide (DMSO). No permeation could be detected over a period of many weeks by monitoring liquid levels and using chemical analysis. The situation principally changed if both compartments were filled with water solutions. In this case, permeation through the same vacuum-tight membrane can readily be observed as rapid changes in liquid levels (several mm per day). The direction of flow is given by osmotic pressure. For example, a level of a one molar (1 M) sucrose solution in the feed compartment rises whereas it falls in the permeate compartment filled with deionized water. For a membrane with a thickness *h* of 1 µm, we find osmotic water flow rates of ≈0.2 L m⁻² h⁻¹, and the speed increases with increasing the molar concentration C. Because a 1 M sucrose solution corresponds to an osmotic pressure of ≈25 bar at room temperature (van't Hoff factor is 1 in this case), the flow rates agree with the evaporation rates of ≈10 L m⁻²h⁻¹ reported for similar GO membranes (Nair et al. Science, 2012, 335, 442-444), in which case the permeation was driven by a capillary pressure of the order of 1,000 bars. Note that hydrostatic pressures in these experiments never exceeded 10⁻² bar and, therefore, could be neglected.

After establishing that GO membranes connect the feed and permeate containers with respect to transport of water molecules, we have investigated the possibility that dissolved ions and molecules can simultaneously diffuse through capillaries. To this end, we have filled the feed container with various solutions and studied if any of the solutes appears on the other side of GO membranes, that is, in the permeate container filled with deionized water (Fig. 1B). As a quick test, ion transport can be probed by monitoring electrical conductivity of water in the permeate container (Fig. 4). We have found that for some salts (for example, KCI) the conductivity increases with time but remains unaffected for others (for example, K₃[Fe(CN)₆]) over many days of measurements. This suggests that only certain ions may diffuse through GO laminates. Note that ions are not dragged by the osmosis-driven water flow but move in the opposite direction.

To quantify permeation rates for diffusing solutes and test those that do not lead to an increase in conductivity (sucrose, glycerol and so on), we have employed various analytical techniques. Depending on a solute, we have used ion chromatography, inductively coupled plasma optical emission spectrometry, total organic carbon analysis and optical absorption spectroscopy. As an example, Figure 1C shows our results for MgCl₂ which were obtained by using ion chromatography and inductively coupled plasma optical emission spectrometry for Mg²⁺ and Cl⁻, respectively. One can see that concentrations of Mg²⁺ and Cl⁻ in the permeate container increase linearly with time, as expected. Slopes of such curves yield permeation rates. The inset of Fig. 1C illustrates that the observed rates depend linearly on C in the feed container. Note that cations and anions move through membranes in stoichiometric amounts so that charge neutrality within each of the containers is preserved. Otherwise, an electric field would build up across the membrane, slowing fast ions until the neutrality is reached. In Fig. 1C, permeation of one Mg²⁺ ion is accompanied by two ions of chloride, and the neutrality condition is satisfied.

Figure 2 summarizes our results obtained for different ionic and molecular solutions. The small species permeate with approximately the same speed whereas large ions and organic molecules exhibit no detectable permeation. The effective volume occupied by an ion in water is characterized by its hydrated radius. If plotted as a function of this parameter, our data are well described by a single-valued function with a sharp cutoff at ≈4.5Å (Fig. 2). Species larger than this are sieved out. This behavior corresponds to a physical size of the mesh of ≈9Å. Fig. 2 also shows that permeation rates do not exhibit any notable dependence on ion charge and triply charged ions such as AsO₄³⁻ permeate with approximately the same rate as singly-charged Na⁺ or Cl⁻. Finally, to prove the essential role of water for ion permeation through GO laminates, we dissolved KCI and CuSO₄ in DMSO, the polar nature of which allows solubility of these salts. No permeation has been detected, proving that the special affinity of GO laminates to water is important.

To explain the observed sieving properties, it is possible to employ the model previously suggested to account for unimpeded evaporation of water through GO membranes (Nair et al. Science, 2012, 335, 442-444). Individual GO crystallites may have two types of regions: functionalized (oxidized) and pristine. The former regions may act as spacers that keep adjacent crystallites apart. It may be that, in a hydrated state, the spacers help water to intercalate between GO sheets, whereas the pristine regions provide a network of capillaries that allow nearly frictionless flow of a layer of correlated water. The earlier experiments using GO laminates in air with a typical *d* ≈10 Å have been explained by assuming one monolayer of moving water. For GO laminates soaked in water, *d* increases to ≈13±1 Å, which allows two or three monolayers. Taking into account the effective thickness of graphene of 3.4 Å (interlayer distance in graphite), this yields a pore size of ≈9-10 Å, in agreement with the mesh size found experimentally.

To support this model, molecular dynamics simulations (MDS) can be used. The setup is shown in Fig. 3A where a graphene capillary separates feed and permeate reservoirs, and its width is varied between 7 and 13 Å to account for the possibility of one, two or three monolayers of water. It is found that the narrowest MDS capillaries become filled with a monolayer of ice as described previously and do not allow inside even such small ions as Na⁺ and Cl⁻. However, for two and three monolayers expected in the fully hydrated state, ions enter the capillaries and diffuse into the permeate reservoir. Their permeation rates are found approximately the same for all small ions and show little dependence on ionic charge (Fig. 3B). Larger species (toluene and octanol) cannot permeate even through capillaries containing three monolayers of water (Fig. 6). Large solutes have been modelled as atomic clusters of different size and it is found that the capillaries accommodating 2 and 3 water monolayers rejects clusters with the radius larger than ≈4.7 and 5.8 Å, respectively. This probably indicates that the ion permeation through GO laminates is limited by regions containing two monolayers of water. The experimental and theory results in Figs 2 & 3B show good agreement.

Regarding the absolute value of ion permeation rates found experimentally, it is possible to estimate that, for laminates with *h* ≈5 µm and *L* ≈1 µm, the effective length of graphene capillaries is *L*×*h*/*d* ≈5 mm and they occupy *d*/*L* ≈0.1% of the surface area of the GO membrane. For a typical diffusion coefficient of ions in water (≈10⁻⁵ cm²/s), the expected diffusion rate for a 1M solution through GO membrane is ≈10⁻³ mg/h/cm², that is, thousands of times smaller than the rates observed experimentally. Moreover, this estimate neglects the fact that functionalized regions narrow the effective water column. To appreciate how fast the observed permeation is, we have used the standard coffee filter paper and found the same diffusion rates for the paper of 1 mm in thickness (the diffusion barrier is equivalent to a couple of mm of pure water). Such fast transport of small ions cannot be explained by the confinement, which increases the diffusion coefficient by 50%, reflecting the change from bulk to two-dimensional water. Furthermore, functionalized regions (modeled as graphene with randomly attached epoxy groups) do not enhance diffusion but rather suppress it as expected because of the broken translational symmetry.

To understand the ultrafast ion permeation, it should be recalled that graphene and GO powders exhibit a high adsorption efficiency with respect to many salts. Despite being very densely stacked, GO laminates are surprisingly found to retain this property for salts with small hydrated radii. Experiments show that permeating salts are adsorbed in amounts reaching as much as 25% of membranes' initial weight (Fig. 5). The large intake implies highly concentrated solutions inside graphene capillaries (close to the saturation). MDS simulations confirm that small ions prefer to reside inside capillaries (Fig. 7). The affinity of salts to graphene capillaries indicates an energy gain with respect to the bulk water, and this translates into a capillary-like pressure that acts on ions within a water medium, rather than on water molecules in the standard capillary physics. Therefore, in addition to the normal diffusion, there is a large capillary force, sucking small ions inside the membranes and facilitating their permeation. Our MDS provide an estimate for this ionic pressure as ≈50 bars. The membranes would therefore be expected to form efficient sorbents for appropriate solutes.

### Example 1. Fabrication and characterization of GO membranes and Experimental Set-up

Graphite oxide was prepared by exposing millimeter size flakes of natural graphite to concentrated sulfuric acid, sodium nitrate and potassium permanganate (Hummers' method). Then, graphite oxide was exfoliated into monolayer flakes by sonication in water, which was followed by centrifugation at 10,000 rpm to remove remaining few-layer crystals. GO membranes were prepared by vacuum filtration of the resulting GO suspension through Anodisc alumina membranes with a pore size of 0.2 µm. By changing the volume of the filtered GO solution, it was possible to accurately control the thickness h of the resulting membranes, making them from 1 to more than 10 µm thick. For consistency, all the membranes described in this report were chosen to be 5 µm in thickness, unless a dependence on h was specifically investigated.

GO laminates were usually left on top of the Anodiscs that served as a support to improve mechanical stability. In addition, influence of this porous support on permeation properties of GO was checked and they were found to be similar to those of free standing membranes.

The permeation experiments were performed using a U-shaped device shown in Fig. 1 of the main text. It consisted of two tubular compartments fabricated either from glass or copper tubes (inner diameters of 25 mm), which were separated by the studied GO membranes. The membranes were glued to a Cu foil with an opening of 1 cm in diameter (see Fig. 1 of the main text). The copper foil was clamped between two O-rings, which provided a vacuum-tight seal between the two compartments. In a typical experiment, one of the compartments was filled (referred to as feed) with a salt or molecular solution up to a height of approximately 20 cm (0.1 L volume). The other

(permeate) compartment was filled with deionized water to the same level. Note that the hydrostatic pressure due to level changes played no role in these experiments where the permeation was driven by large concentration gradients. Magnetic stirring was used in both feed and permeate compartments to avoid possible concentration gradients near the membranes (concentration polarization effect).

The GO membranes including their entire assembly with the O-rings were thoroughly tested for any possible cracks and holes. In the first control experiment, GO membranes were substituted with a thin Cu foil glued to the Cu foil with all the other steps remaining the same. Using a highly concentrated salt solution in the feed compartment, we could not detect any permeation. In the second experiment, we used reduced GO, which makes the GO membrane water impermeable. Again, no salt permeation could be detected, which proves the absence of holes in the original GO membrane. Finally and most conclusively, we used a helium-leak detector. No holes could be detected in our GO membranes both before and after permeation measurements

Although graphite oxide is known to be soluble in water, the vacuum-filtered GO laminates were found to be highly stable in water, and it was practically impossible to redisperse them without extensive sonication. No degradation or damage of membranes was noticed in these filtration experiments lasting for many weeks. To quantify the solubility of GO laminates, we accurately measured their weight and thickness before and after immersing in water for two weeks. No weight or thickness loss could be detected within our accuracy of <0.5%.

Membranes were thoroughly tested for any possible cracks or holes by using a helium-leak detector as described in Nair et al. Science, 2012, 335, 442-444. To check the laminar structure of our GO membranes, we performed X-ray diffraction measurements, which yielded the interlayer separation *d* of 9-10 Å at a relative humidity of 50±10%.

PVA-GO laminate samples were prepared by blending water solutions of GO and PVA using a magnetic stirrer. The concentrations were chosen such that a weight percentage of GO in the final laminates of 60-80% was achieved, after water was removed by evaporation. We used vacuum filtration, drop casting and rod coating techniques to produce free standing PVA-GO membranes and PVA-GO coated substrates.

### Example 2. Monitoring ion diffusion by electrical measurements

For a quick qualitative test of ion permeation through GO membranes, the setup shown in Fig. 4 was used. The feed and permeate compartments were separated by GO membranes. We used the same assembly as described above but instead of Cu foil GO were glued to a glass slide with 2 mm hole and the liquid cell was small and made entirely from Teflon. The feed compartment was initially filled with a few mL of a concentrated salt solution, and the permeate compartment contained a similar volume of deionized water. The typical feed solution was approximately a million times more electrically conducting than deionized water at room temperature. Therefore, if ions diffuse through the membrane, this results in an increase in conductivity of water at the permeate side. Permeation of salts in concentrations at a sub-µM) level can be detected in this manner. Resistance of permeate solution was monitored by using a Keithley source meter and platinum wires as electrodes.

Figure 4 shows examples of our measurements for the case of NaCI and potassium ferricyanide K₃[Fe(CN)₆]. The observed decreasing resistivity as a function of time indicates that NaCl permeates through the membrane. Similar behavior is observed for CuSO₄, KCI and other tested salts with small ions (see the main text). On the other hand, no noticeable changes in conductivity of deionized water can be detected for a potassium ferricyanide solution during measurements lasting for many days (Fig. 4).

### Example 3. Quantitative analysis of ion and molecular permeation

The above electrical measurements qualitatively show that small ions can permeate through our GO membranes whereas large ions such as [Fe(CN)₆]³⁻ cannot. The technique is not applicable for molecular solutes because they exhibit little electrical conductivity. To gain quantitative information about the exact amount of permeating ions as well as to probe permeation of molecular solutes, chemical analysis of water at the permeate side was carried out. Samples were taken at regular intervals from a few hours to a few days and, in some cases, after several weeks. Due to different solubility of different solutes, different feed concentrations were used. They varied from 0.01 to 2 M, depending on a solute. For each salt, measurements were performed at several different feed concentrations to ensure that we worked in the linear response regime where the permeation rate was proportional to the feed concentration (Fig. 1C) and there was no sign of the concentration polarization effect.

The ion chromatography (IC) and the inductively coupled plasma optical emission spectrometry (ICP-OES) are the standard techniques used to analyze the presence of chemical species in solutions. The IC for anionic species was employed, and the ICP-OES for cations. The measurement techniques provided us with values for ion concentrations in the permeate water. Using the known volume of the permeate (∼0.1 L) the number of ions diffused into the permeate compartments were calculated. For certain salts (those with low solubility), the obtained permeate solutions were first concentrated by evaporation to improve the measurement accuracy. Furthermore, the results of the chemical analysis were crosschecked by weighing a dry material left after evaporation of water in the permeate compartment. This also allowed the calculation of the amounts of the salt permeated through the GO membranes. The weight and chemical analyses were found in good quantitative agreement.

To detect organic solutes such as glycerol, sucrose and propanol, the total organic carbon (TOC) analysis was employed. No traces of glycerol and sucrose could be found in the permeate samples after several weeks, but propanol could permeate, although at a rate much lower than small ions as shown in Fig. 2. The detection limit of the TOC was about 50 µg/L, and this put an upper limit on permeation of the solutes that could not be detected. The corresponding limiting values are shown by arrows in Fig. 2. The above techniques were calibrated using several known concentrations of the studied solutes, and the detection limits were identified by decreasing the concentration of the standard solution until the measured signal became five times the baseline noise.

The optical absorption spectroscopy is widely used to detect solutes with absorption lines in the visible spectrum. This technique was employed for large ions such as [Fe(CN)₆]³⁻, [Ru(bipy)₃]²⁺of Tris(bipyridine)ruthenium(II) dichloride ([Ru(bipy)₃]Cl₂) and PTS⁴⁻ of pyrenetetrasulfonic acid tetrasodium salt (Na₄PTS). It was not possible to detect any signatures of [Fe(CN)₆]³⁻ , [Ru(bipy)₃]²⁺ and PTS⁴⁻ on the permeate side, even after many weeks of running the analysis. The absorption spectra were taken with air as a background reference. The detection limit was estimated by measuring a reference solution and gradually decreasing its concentration by a factor of 2-3 until the optical absorption peaks completely disappeared. The penultimate concentration was chosen as the corresponding detection limits in Fig. 2.

An experiment was performed in which a mixture of 0.5M NaCl and 0.01M tris(bipyridine)ruthenium(ll) dichloride ([Ru(bipy)₃]Cl₂) was tested. It was found that only sodium chloride diffused through the membrane and [Ru(bipy)₃]Cl₂ was blocked by the membrane. This indicates that the presence of small ions don't open up the channels enough to allow larger ions to permeate. However, the presence of [Ru(bipy)₃]Cl₂ decreases the NaCl permeation rate through the membrane by a factor often.

### Comparative Example 5. Salt absorption by GO laminate membranes

To test the adsorbing efficiency of GO laminates with respect to salts, the following experiments were carried out. GO laminate membranes were accurately weighed and placed in a solution with salt's concentration C (we used MgCl₂, KCI and K₃[Fe(CN)₆]). After several hours, the laminates were taken out, rinsed with deionized water and dried. An intake of the salts was then measured. Fig. 5 shows that for salt that cannot permeate through GO laminates, there is no increase in weight. On the other hand, for the salts that fit inside GO capillaries, a massive intake was observed that reaches up to 25% in weight (Fig. 5). The intake rapidly saturates at relatively small C of ≈0.1 M. Further analysis shows that more than a half of this intake is a dry salt with the rest being additional bound water.

The mass intake in Figure 5A can be due to both dry salt and extra water accumulated inside the capillaries in the presence of the salt. It was possible to separate the contributions by using the following two approaches. For the first one, a GO laminate was dried out in zero humidity of a glove box for one week and accurately weighted. Then, the laminate sample was exposed to a 1M MgCl₂ solution and dried again in zero humidity for a week. A mass intake of 13±2% was found, that is, smaller than that in Fig. 5A. The latter result was confirmed by using a chemical approach. A sample of the same GO laminate exposed to a 1M MgCl₂ solution was dissolved in a mixture of nitric, sulphuric and perchloric acids at 300°C, which effectively turned carbon into CO₂ (chemical burning of graphene). After this, ICP-OES (iCap 6300) was employed to measure the amount of Mg in the resulting solution. We found 3-3.2% of Mg in weight, which translates into ≈13% mass intake of MgCl₂ from a 1M solution, in agreement with the above result based on weighing. This percentage means that more than a half of the intake in Fig. 5A was due to the dry salt with the rest being additional bound water.

This experiment was repeated at high and low pH. pH of the salt solution was adjusted by adding either dilute hydrochloric acid or ammonium hydroxide solutions as appropriate. The amount of salt absorbed into the GO membranes were measured after treating (immersing) the GO membranes in one molar salt solution with different pH for 24hour. The weight uptake was measured by using the gravimetric methods.

The table below shows the results for MgCl₂.

| pH | Mass intake (wt%) |
|---|---|
| 2 | 7.1% |
| 6 | 12.6% |
| 11 | 18.2% |

As can be seen, the sorption capability of the membrane increases with pH. A similar trend was observed for NaCl.

The large salt intake proves that the permeating solutes accumulate inside GO capillaries, leading to highly concentrated internal solutions. Using the measured amount of adsorbed salts and the known amount of water in fully hydrated GO laminates, we estimate that concentrations of the internal solutions reach several molar, that is, can exceed external C by a factor of 10 or more. This "salt sponge" effect is in qualitative agreement with the strong adsorption properties reported previously for graphene and GO powders.

The accumulation of salts inside GO capillaries means that there is a significant energy gain when ions move inside capillaries from the bulk solution. Our MDS confirm this effect and indicate that the energy gain is mostly due to interaction of ions with graphene walls. The ion sponging is reminiscent of the standard capillary effects where molecules can gain energy by moving inside confined regions. In this case, water plays a role of a continuous medium in which the capillary-like pressure acts on ions, sucking them inside capillaries from the bulk water.

This data shows that GO laminates can be effective as sorbents, particularly at high pH. The physical and chemical structures of the laminates, and particularly their capillary structures, are not altered when supported on, for example, a porous support. The size of the capillaries and the distribution of chemical functionalisation across the flakes and through the capillary network remains substantially the same. It is expected therefore that supported laminates are effective sorbents. For most practical applications, it is expected that the laminates would be supported on a porous support as indicated elsewhere in this specification. However, for some applications it may be advantageous to have an unsupported laminate.

### Example 6. X-ray analysis of GO laminates

The GO laminates were also examined using X-ray diffraction. Figure 5B shows the diffraction peak for GO at a relative humidity of ≈50%. It corresponds to the interlayer separation *d* ≈8Å. For GO laminates immersed in water, the peak is shifted to *d* ≈3Å. It is interesting to note that the peak in water has not become notably broader. This means that the layered structure of GO laminates is preserved in the fully immersed state, and the additional water is adsorbed as an extra layer with a rather uniform thickness of ≈5Å. Taking into account that *d* for reduced GO is ≈4Å, a free space of 9±1Å exists between graphene sheets and it is available for transport of water. The latter value is in good agreement with the permeation cut-off observed experimentally and in the MD simulations. We have also measured the volume of taken-in water by weighing. GO laminates exposed to nearly 100% humidity exhibited a water intake that was equal to approximately *h*×*S* where S is the laminate area and h its thickness. This is the volume of graphene capillaries, which is used to estimate diffusion through the equivalent water column (see the main text).

When the GO laminates were soaked in NaCl or KCI solutions and then dried out at the same 50±10% humidity as above, d increased from 8 to 9 Å (see Fig. 5B). This increase in the interlayer spacing is consistent with the fact that a significant amount of salts is trapped within graphene capillaries. On the other hand, *d* for GO inside a concentrated salt solution was found to be similar to that for GO in clean water. The latter observation is attributed to the fact that *d* is determined by the number of intercalating layers of water whereas ions are moving inside this water layer, in agreement with the MD simulations.

### Example 7. Molecular dynamics simulations

Our basic modeling setup consisted of two equal water reservoirs connected by a capillary formed by parallel graphene sheets as shown in Fig. 3A. Sizes of the reservoirs and capillaries varied in different modeling experiments. To analyze the salt-sponge effect and study ion diffusion in the confined geometry, we used reservoirs with a height of 51.2 Å, a length of 50 Å and a depth of 49.2 Å, which were connected by a 30 Å long capillary. A slightly smaller setup was used to assess sieving properties of graphene capillaries. It consisted of the reservoirs with a height of 23.6 Å, a length of 50 Å and a depth of 30.1 Å, which were connected by a 20 Å long capillary. For both setups, we varied the capillary width d from 7 to 13 Å (d is the distance between the centers of the graphene sheets). When the same property was modeled, both setups yielded similar behavior. Periodic boundary conditions were applied in the Z direction, that is, along the capillary depth. Ions or molecules were added until the desired molar concentrations were reached. Water was modeled by using the simple point charge model. Sodium and chlorine ions were modeled by using the parameters from E. S. David, X. D. Liem. J. Chem. Phys. 100, 3757 (1994) and S. Chowdhuri, A. Chandra. J. Chem. Phys. 115, 3732 (2001); magnesium and copper anions with the OPLS-AA parameters. Intermolecular interactions were described by the 12-6 Lennard-Jones (LJ) potential together with a Coulomb potential. Parameters for water/graphene interactions were reported in C. Ailan, W. A. Steele. J. Chem. Phys. 92, 3858 (1990) and T. Werder, J. H. Walther, R. L. Jaffe, T. Halicioglu, P. Koumoutsakos. J. Phys. Chem. B 107, 1345 (2003).

The system was initially equilibrated at 300 K with a coupling time of 0.1 ps⁻¹ for 500 ps . In the modeling of sieving properties, our typical simulation runs were 100 ns long and obtained in the isobaric ensemble at the atmospheric pressure where the simulation box was allowed to change only in the X and Y direction with a pressure coupling time of 1 ps⁻¹ and a compressibility of 4.5×10⁻⁵ bar⁻¹. The cutoff distance for nonbonding interactions was set up at 10 Å, and the particle mesh Ewald summations method was used to model the system's electrostatics. During simulations, all the graphene atoms were held in fixed positions whereas other bonds were treated as flexible. A time step of 1 fs was employed.

To model sieving properties of graphene, the GROMACS software was used. At the beginning of each simulation run, water molecules rapidly filled the graphene capillary forming one, two or three layer structures, depending on d. Then after a certain period of time, which depended on a solute in the feed reservoir, ions/molecules started enter the capillary and eventually reached the pure water reservoir for all the modeled solutes, except for toluene and octanol. The found permeation rates are shown in Fig. 3B. We have also noticed that cations and anions move through the capillary together and without noticeably changing their hydration shells.

### Example 8. Theoretical analysis of permeation for large molecules

In the case of organic molecules (for example, propanol) simulations showed that they entered the graphene capillary but then rapidly formed clusters that resided inside the capillary for a long time. The cluster formation is probably due to confinement. On the other hand, the long residence times can be attributed to van der Waals forces between the alcohol molecules and graphene. Toluene molecules exhibited even stronger interaction with graphene (due to π-π staking). In simulations, toluene molecules entered the channel but never left it being adsorbed to graphene walls (Fig. 6). This adsorption is likely to be responsible for the experimentally undetectable level of toluene permeation. Therefore, despite the experimental data suggesting a rather simple sieving behavior that can be explained just by the physical size effect, we believe that van der Waals interactions between solutes and graphene may also play a role in limiting permeation for those molecules and ions that have sizes close to the cutoff radius.

To better understand the observed sieving effect with its sharp physical cutoff, the following analysis was performed. An artificial cluster was modeled as a truncated icosahedron and placed in the middle of the capillary as shown in the inset of Fig. 3B. The size of the cluster was varied by changing the distance between the constituent 60 atoms, and the interaction energy between the cluster and the graphene capillary was calculated. The energy was computed as the sum of interactions between all the atoms involved which were modeled with a 12-6 LJ potential. Positive and negative values of the calculated energy indicate whether the presence of the cluster in the capillary is energetically favorable or not, respectively. The minimum radius for which the spherical cluster was allowed into the graphene capillary obviously depended on the capillary size. For capillaries that allowed two monolayers of waters (*d* = 9Å) this radius was found to be 4.7Å. For wider capillaries containing three water monolayers (*d* = 13Å), the radius was 5.8Å. These values are shown in Fig. 3B as the blue bars.

### Example 9. Simulations of the ion sponge effect

In this case, a relatively long capillary (482 Å) was employed such that its volume was comparable to that of the reservoirs (see Fig. 7A). The capillary width was varied between 9 and 11 Å, which corresponds to 2 and 3 monolayers of water. MDS were carried out in a canonical ensemble using LAMMPS. The temperature was set at 300 K by using the Nose-Hoover thermostat. The equations of motion were integrated using a velocity-Verlet scheme with a time step of 1.0 fs. The snapshots obtained in these simulations (an example is shown in Fig. 7A) were processed by Atomeye.

During the simulations, we counted the number of ions inside the capillary as a function of time (Fig. 7B). If the initial concentration *C* of NaCl was taken constant over the entire system (for example, *C* =1 M for the black curve in Fig. 7B), we found that the salt moved from the reservoirs into the capillary, that is, ions were attracted to the confined region. Then, we used smaller initial C inside the two reservoirs (0.1 and 0.5 M) while keeping the same *C* =1 M inside the capillary. Despite the large concentration gradient, the salt still moved into the capillary rather than exited it (see Fig. 7B).

In the next MDS experiment, a low concentration of NaCl was kept in the two reservoirs *(C* =0.1 M) and gradually increased *C* inside the graphene capillary up to 3 M. For *C* =2 M inside it, an influx of NaCl from the reservoirs was still observed. The salt started leaving the capillary only if *C* inside approached ~3 M. This allows an estimate of the equilibrium concentration of NaCl inside the graphene capillary as 2-3M, in good agreement with the experiments discussed in section #5. The concentration gradient corresponds to a capillary-like pressure of ≈50 bars, which acts on salt ions against the osmotic pressure.

We have also assessed whether functionalized GO regions can play any major role in the salt sponge effect and, more generally, in molecular permeation through GO laminates. To this end, we used the same MDS setups as described above but added hydroxyl and epoxy groups to both walls of graphene capillaries. The epoxy group was modeled by binding an oxygen atom to two carbon atoms of graphene and the hydroxyl group (OH) by its oxygen bonded to a carbon atom. For simplicity, oxygen atoms were fixed in their positions whereas the O-H bond was treated as flexible. Fig. 4C shows an example of the latter simulations. Both ion and water dynamics inside GO capillaries is found to be extremely slow. Accordingly, we expect that the sponge effect should be weaker for functionalized capillary regions compared to pristine ones. In addition, the case where only regions near the entrances of the graphene capillary were covered with hydroxyl and epoxy groups was simulated (Fig. 7C). These simulations again showed slow water and ion dynamics, similar to the case of GO capillaries.

Throughout the description and claims of this specification, the words "comprise" and "contain" and variations of them mean "including but not limited to", and they are not intended to (and do not) exclude other moieties, additives, components, integers or steps. Throughout the description of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification or to any novel one, or any novel combination, of the steps of any method or process so disclosed, as defined by the following claims.

## Claims

1. A method of reducing the amount of one or more solutes in an aqueous mixture to produce a liquid with an altered ratio of the concentration of one or more solutes relative to the concentration of one or more other solutes; the method comprising:
(a) contacting a first face of a graphene oxide laminate membrane with the aqueous mixture comprising the solutes; and
(b) recovering the liquid having the altered concentration ratio from or downstream from a second face of the membrane;
wherein the graphene oxide laminate membrane has a thickness greater than 100 nm and wherein the graphene oxide flakes of which the laminate is comprised have an average oxygen:carbon weight ratio in the range of from 0.3:1.0 to 0.4:1.0.

2. A method of claim 1, wherein the method is method of selectively reducing the amount of a first set of one or more solutes in an aqueous mixture without significantly reducing the amount of a second set of one or more solutes in the aqueous mixture to produce a liquid depleted in said first set of solutes but not depleted in said second set of solutes, wherein the or each solute of the first set has a radius of hydration greater than 4.5 Å and the or each solute of the second set has a radius of hydration less than 4.5 Å.

3. The method of claim 1 or claim 2, wherein no electrical potential is applied across the membrane.

4. A method of any preceding claim, wherein the method is continuous.

5. A method of any preceding claim, wherein the graphene oxide laminate membrane is supported on a porous material.

6. A method of any preceding claim, wherein the graphene oxide laminate further comprises graphene, reduced graphene oxide, hBN or mica.

7. A method of any preceding claim, wherein the graphene oxide laminate further comprises a cross-linking agent.

8. A method of any preceding claim, wherein the solutes are ions.

9. A method of any one of claims 1 to 7, wherein the solutes are neutral organic species.

10. A method of any preceding claim, wherein the aqueous mixture has a pH from about 5 to about 13.

## Patentansprüche

1. Verfahren zum Reduzieren der Menge eines oder mehrerer gelöster Stoffe in einem wässrigen Gemisch zur Erzeugung einer Flüssigkeit mit einem veränderten Verhältnis der Konzentration eines oder mehrerer gelöster Stoffe im Verhältnis zu der Konzentration eines oder mehrerer anderer gelöster Stoffe, wobei das Verfahren folgendes umfasst:
(a) Inkontaktbringen einer ersten Seite einer Graphenoxidlaminatmembran mit dem wässrigen Gemisch, das die gelösten Stoffe umfasst; und
(b) Rückgewinnen der Flüssigkeit mit dem veränderten Konzentrationsverhältnis von oder stromabwärts einer zweiten Seite der Membran;
wobei die Graphenoxidlaminatmembran eine Dicke von mehr als 100 nm aufweist, und wobei die Graphenoxidflocken, aus denen das Laminat besteht, ein durchschnittliches Gewichtsverhältnis von Sauerstoff zu Kohlenstoff im Bereich von 0,3:1,0 bis 0,4:1,0 aufweisen.

2. Verfahren nach Anspruch 1, wobei das Verfahren ein Verfahren des selektiven Reduzierens der Menge einer ersten Gruppe eines oder mehrerer gelöster Stoffe in einem wässrigen Gemisch ist, ohne die Menge einer zweiten Gruppe eines oder mehrerer gelöster Stoffe in dem wässrigen Gemisch signifikant zu reduzieren, um eine Flüssigkeit zu erzeugen, die in der ersten Menge gelöster Stoffe erschöpft ist, jedoch in der zweiten Menge gelöster Stoffe nicht erschöpft ist, wobei der oder jeder gelöste Stoff der ersten Menge einen Hydratationsradius aufweist, der größer ist als 4,5 Å, und wobei der oder jeder gelöste Stoff der zweiten Menge einen Hydratationsradius aufweist, der kleiner ist als 4,5 Å.

3. Verfahren nach Anspruch 1 oder 2, wobei an der Membran kein elektrisches Potenzial angelegt ist.

4. Verfahren nach einem der vorstehenden Ansprüche, wobei das Verfahren kontinuierlich ist.

5. Verfahren nach einem der vorstehenden Ansprüche, wobei die Graphenoxidlaminatmembran auf einem porösen Material getragen wird.

6. Verfahren nach einem der vorstehenden Ansprüche, wobei das Graphenoxidlaminat ferner Graphen, reduziertes Graphenoxid, hBN oder Glimmer umfasst.

7. Verfahren nach einem der vorstehenden Ansprüche, wobei das Graphenoxidlaminat ferner ein Vernetzungsmittel umfasst.

8. Verfahren nach einem der vorstehenden Ansprüche, wobei die gelösten Stoffe Ionen sind.

9. Verfahren nach einem der Ansprüche 1 bis 7, wobei die gelösten Stoffe neutrale organische Spezies sind.

10. Verfahren nach einem der vorstehenden Ansprüche, wobei das wässrige Gemisch einen pH-Wert von etwa 5 bis etwa 13 aufweist.

## Revendications

1. Procédé de réduction de la quantité d'au moins un soluté dans un mélange aqueux pour produire un liquide avec un rapport modifié de la concentration d'au moins un soluté par rapport à la concentration d'au moins un autre soluté ; le procédé comprenant les étapes suivantes :
(a) mise en contact d'une première face d'une membrane stratifiée d'oxyde de graphène avec le mélange aqueux comprenant les solutés ; et
(b) récupération du liquide ayant le rapport de concentration modifié à partir ou en aval d'une seconde face de la membrane ;
la membrane stratifiée d'oxyde de graphène ayant une épaisseur supérieure à 100 nm et les flocons d'oxyde de graphène dont est constitué le stratifié ayant un rapport pondéral moyen oxygène:carbone dans la plage de 0,3:1,0 à 0,4:1,0.

2. Procédé selon la revendication 1, le procédé étant un procédé de réduction sélective de la quantité d'un premier ensemble d'au moins un soluté dans un mélange aqueux sans réduire de manière significative la quantité d'un second ensemble d'au moins un soluté dans le mélange aqueux pour produire un liquide appauvri dans ledit premier ensemble de solutés, mais non appauvri dans ledit second ensemble de solutés, le ou chaque soluté du premier ensemble ayant un rayon d'hydratation supérieur à 4,5 Å et le ou chaque soluté du second ensemble ayant un rayon d'hydratation inférieur à 4,5 Å.

3. Procédé selon la revendication 1 ou 2, aucun potentiel électrique n'étant appliqué sur la membrane.

4. Procédé selon l'une quelconque des revendications précédentes, le procédé étant continu.

5. Procédé selon l'une quelconque des revendications précédentes, la membrane de stratifié d'oxyde de graphène étant supportée sur un matériau poreux.

6. Procédé selon l'une quelconque des revendications précédentes, le stratifié d'oxyde de graphène comprenant en outre du graphène, de l'oxyde de graphène réduit, du hBN ou du mica.

7. Procédé selon l'une quelconque des revendications précédentes, le stratifié d'oxyde de graphène comprenant en outre un agent de réticulation.

8. Procédé selon l'une quelconque des revendications précédentes, les solutés étant des ions.

9. Procédé selon l'une quelconque des revendications 1 à 7, les solutés étant des espèces organiques neutres.

10. Procédé selon l'une quelconque des revendications précédentes, le mélange aqueux ayant un pH compris entre 5 et environ 13.
